# EUROPEAN PATENT APPLICATION

(11) **EP 2 797 059 A1**
(43) Date of publication of application: **29.10.2014**
(21) Application number: 13382149.6
(22) Date of filing: 23.04.2013
(51) Int. Cl.: G07G 1/00, G06Q 20/20

(54) **System and method for purchasing items and box to identify items placed therein**

(71) Applicant: Telefonica Digital España, S.L.U., 28013 Madrid (ES)
(72) Inventor: Segura Romo, Sonia, 28013 Madird (ES); Sinfreu Alay, Albert, 28013 Madrid (ES)
(74) Representative: Gonzalez-Alberto Rodriguez, Natalia

(57) **Abstract**

The system comprising a container equipped with detector means to carry out an identification of items to be purchased, said items including a tag to be detected when or after said items are placed inside said container through at least an opening of said container, the system including first communication means configured to communicate said container with a shop system backend; means for providing to said user, at least an information about the items included in said container; and locking means to close in a safe manner said container once the items to be purchased have been introduced within said container, said locking means being in connection with said first communication means, so that a link with said shop system backend is provided for enabling payment and item delivery options of the purchased items.

## Description

### Field of the art

The present invention generally relates to automatic shopping containers, and more particularly to a system and a method for purchasing items, said items being placed in a container equipped with a technology that allows at least an automatic accounting control and identification of the items to be purchased.

The invention also refers to a box equipped with a technology to identify items placed therein and hence allowing speeding up the checkout process in a shop.

### Prior State of the Art

The proposed invention relies on the Radio Frequency Identification (RFID) technology. RFID is the use of a wireless non-contact system that uses radio-frequency electromagnetic fields to transfer data from a tag attached to an object, for the purposes of automatic identification and tracking. Some tags require no battery and are powered and read at short ranges via magnetic fields (electromagnetic induction). Others use a local power source and emit radio waves (electromagnetic radiation at radio frequencies). The tag contains electronically stored information which can be read from up to several meters (yards) away. Unlike a bar code, the tag does not need to be within line of sight of the reader and may be embedded in the tracked object."

### (Wikipedia)

A variety of supermarket trolleys equipped with an RFID receiver allowing the customer to know the cost of the shopping in real time as the shopping process takes place already exist in supermarkets. The substitution of the bar code tagging for RFID tags offers many advantages to the stocks management and allows the unique identification of a piece of clothes.

Shopping carts for supermarkets, mainly for groceries and other food articles, sometimes include add-on pieces with information screen. What is added in the cart will be accounted for and reflected in said screen. Additionally, electronic vouchers may be attached to the shopping user experience. These carts are however limited to articles not having price tag attached. Such a context is different from the present invention, as shopping for clothes imply not having a cart.

Self-checkout stands are also known in the field. However, they do not include detaching means of price tags.

Then, most of shops' payment process usually includes registering each item using its barcode in the system, removing or disconnecting the alarm device from the item, packaging all the items in a gift box or in a bag and finally the customer paying using any of the allowed payment methods.

So, a complete solution that in addition of identifying the items also makes the checkout process from a shop faster does not exist.

### Summary of the Invention

It is therefore an object of the invention to provide a complete solution that permits an automatic accounting control and identification of the items a customer or user wants to purchase and that speeds up the checkout process of a shop (i.e. allow the user get faster in the payment process, avoiding queuing due to the different delivery options, etc.).

To that end, the present invention relates, in a first aspect, to a system for purchasing items, comprising a container equipped with detector means, such as a radio frequency identification receiver, to carry out an identification of items to be purchased, said items including a tag, such as a RFID tag, to be detected when or after said items are placed inside said container by a purchasing user through at least an opening of said container. In a characteristic manner and on contrary of the known proposals the system of the first aspect further comprises: first communication means configured to communicate said container with a shop system backend; means for providing to said user, at least an information about the items included in said container; locking means to close in a safe manner said container once the items to be purchased have been introduced within said container by said user; and said locking means being in connection with said first communication means, so that a link with said shop system backend is provided for enabling payment and item delivery options of the purchased items related to said container.

The proposed container in a preferred implementation is a box which can be made out of several different materials, forms and/or sizes, including several modules or elements in order to meet user needs. Materials preferably should be light and resistant enough to be able to manipulate the box by hand without damaging the content. These materials could be plastic, silicone, fabric/clothing, aluminium, and fiberglass or even more ecologic such as thin wood board, tetrabrick and/or carton.

According to an embodiment, the means for providing information comprise a display arranged at an external part of said box, i.e. in the frontal side of the box or in the upper side, configured for showing, at any moment, at least the total of said identified items, the total purchase price of said identified items and, when said locking means had close said box, said payment and delivery options.

Alternatively, the means for providing information can include also voice means configured to indicate through of a voice message, at any moment, at least the total of said identified items, the total purchase price of said identified items and, when said locking means had close said box, said payment and delivery options

According to yet another alternative, the means for providing information include any display of a portable computing device of said user, such as a mobile phone, a tablet, a PDA, etc. and also includes second communication means, to notify to said user, by said display, in addition to said information about the items included in said container, any additional information for assisting in the payment or delivery of the items by said user from said shop system backend.

According to another embodiment, preferably the box includes a printer unit for printing out, once one of the payment options has been selected by the user, a purchasing receipt regarding the selected payment option or a pick-up ticket indicating the different delivery options.

A second aspect of the present invention relates to a method for purchasing items, wherein the items include a tag to be detected, comprising as commonly in the field carrying out, by means of detector means arranged to a container, an identification of said items to be purchased, when or after said items are placed inside a container by a user through at least an opening of said container. In a characteristic manner and on contrary of the known proposals the method of the second aspect follows next actions: communicates by any communication technology said container with a shop system backend for controlling said purchasing; provides to said user, either by displaying or through a voice message, an information about the items included in said container; detects a safe close condition of said container with the purchased items within; and enables a communication by said communication technology between the user and said shop system backend related to a payment and a delivery option of the purchased items.

The displaying can be performed either through a display incorporated in an external surface of said container, said container being a box, or through a display of any portable user computing device.

According to an embodiment, when the payment option is selected by the user, for instance credit card, cash, a trusted payment or by means of a global e-commerce business allowing payments through the Internet such as PAYPAL®, a purchasing receipt regarding the selected payment option or a pick-up ticket is also printed out.

Moreover, it also lights up a light incorporated in the external surface of the box indicating a state of said purchasing.

According to yet another embodiment the box is placed in a predetermined drop area within the shop to permit the box to be opened (generally by a shop employee) by controlled opening means, so an unauthorized person could not be open it and hence the items could not be manipulated or stolen, then allowing the items inside the box to be prepared as purchased items.

Finally, when the preparation of the purchasing is finished so that the items are ready for being delivered, a notification to a mobile computer device of said user can be send, for instance by means of a text message or a phone call.

A third aspect of the present invention, relates to a box to identify items placed therein, comprising detector means configured to carry out an identification of items placed inside said box to purchase them. The box further comprising communication means configured to communicate with a shop system backend to enable payment and item delivery options of the purchased items related to said container; and locking means configured to detect a safe close condition of said box, wherein said detector means comprise a radio frequency identification receiver.

The proposed box can include several modules or elements that can be arranged at an external part of said box, i.e. in the frontal side or in the upper side. In a preferred embodiment, the modules or elements of the box that can be provided could be: a display unit configured to show information regarding said items to be purchased and instructions regarding said procedure purchasing, enabling payment and delivering options; a printer configured to print out a purchasing receipt regarding a selected payment option or a pick-up ticket; a light configured to indicate a state of said purchasing procedure; an electronic payment unit including at least a credit card reader unit and/or a contact less receiver unit; and control means configured to at least handle the interaction between the provided box elements.

Alternatively, the box can also include voice means or speaker for receiving a voice message at least allowing receiving information of the purchasing process.

An advantage of the solution provided by the present invention is that users won't have to wait in the shop while the items to be purchased are being prepared, that will lead to a better packaging of the items and better customer satisfaction because he/she will avoid queuing and do something else while his/her order is being prepared and pick it up later at the pick-up point.

### Brief Description of the Drawings

The previous and other advantages and features will be more fully understood from the following detailed description of embodiments, with reference to the attached, which must be considered in an illustrative and non-limiting manner, in which:
Figures 1A and 1B show an embodiment of the proposed box to identify the items placed therein. In Figure 1A is illustrated the alternative where the different modules are placed in the frontal side of the box. In Figure 1B is illustrated the alternative where the different modules are placed in the upper side of the box.
Figure 2 is an illustration of the stages that a typical user using the box would go through according to an aspect of the present invention.
Figure 3 is a flowchart describing the different steps of the proposed method, according to an aspect of the present invention.
Figures 4, 5 and 6 are different flowcharts describing the different processes a user using the box will go through depending on the payment option selected, according to different embodiments of the present invention. Wherein figure 4 describes the credit card payment process, figure 5 describes the cash payment process and figure 6 describes the trusted payment process.

### Detailed Description of Several Embodiments

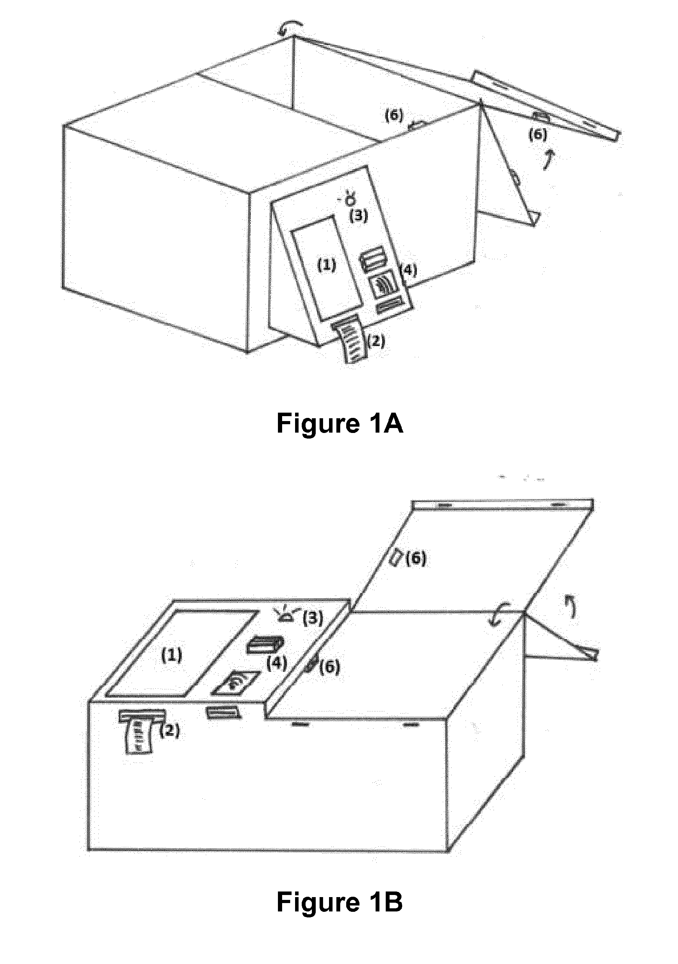

In reference to Figures 1A and 1B, are showed two possible example embodiments of the proposed box, however any other possible combination would be possible. The box preferably is modular in order to meet customer/user needs and its conformation can contain several modules. Figure 1A shows the alternative where the different modules are placed in the frontal side of the box and Figure 1B shows the alternative where the different modules are placed in the upper side of the box.

In both of said possible alternatives the different modules or elements included in the box are: A RFID receiver that will allow the identification of all the items that are put inside the box; a communication module (previously defined as communication means) to allow the communication between the box and the shop system backend; locking means, preferably including a plurality of sensors and a locker; the display unit 1 (for instance a screen with a keyboard or a Tactile Screen) to show all the available options and instructions and allow the user to choose between the options; the printer unit 2 to print out tickets to be used to pay and/or to pick-up the order; the electronic payment unit 4 that can include a contact-less receiver in order to allow the user to pay bringing his NFC device close to this module and/or a credit card reader in order to allow the user swipe his card to pay; and a light or led to show once the box is locked whether the user has already paid for the purchasing or not (for instance it can light up green if the payment is done or red if on contrary the user has still do not made the payment).

According to an alternative the box can also has voice means or speaker for receiving a voice message from the shop system backend.

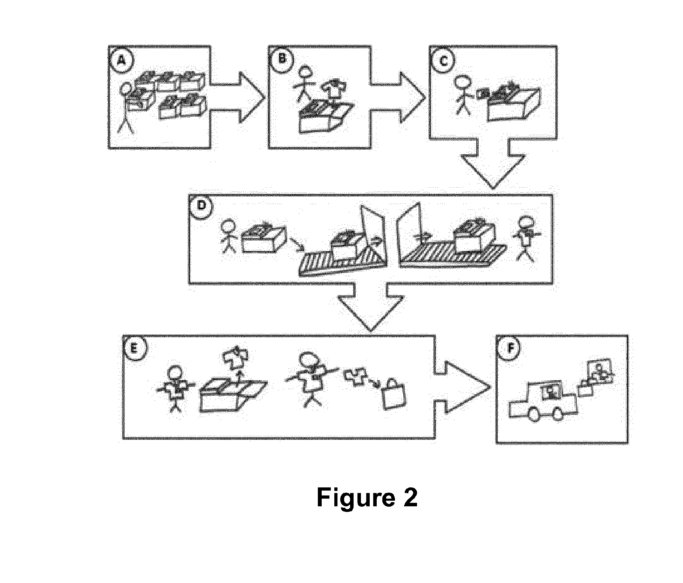

In Figure 2 it is described the possible stages that a typical user could go through when using the proposed box. Referring to Figure 2 six different stages are mainly considered. The first stage A) is the Box selection. For instance, there can be several box pick-up spots in the shop for example in the dressing rooms, so once the user has decided which items are going to be bought, he/she can go to one of these spots. Each spot is somewhere properly indicated where their can find empty boxes ready to be used and information about how to use it. It may also have a desk or similar to comfortably fill it up, follow the instructions and choose the options that will be shown on the screen. B) Once in the box pick-up area, the user can get an empty box, place all the items in it (this can be done one by one or all at once) and follow the instructions shown on the display unit. While the items are being introduced in the box, its display will show all the details of each item and calculate the total amount. The display will also show an option to confirm that the items shown and its details are correct. According to an alternative, said details of the items and the total amount can be communicated to the user by means of the speaker. C) When the user confirms that everything is OK he/she will have to shut the box, provide a mobile phone number (he/she will later receive a notification when his purchase is ready) and choose if the packet has to be gift-wrapped or not. At this point the box will detect whether its lid (or similar) is shut or not and will prompt the user until he/she closes it. When this happens, the payment options will be shown on the display and the user will have to select one of them. Once the user has gone through one of the payment processes and received the notification, he/she can go to his selected pick-up location to get his/her purchase. D) On the shop system backstage there is a preparation zone where the boxes are unlocked and opened by an employee. The employee will detach the alarm from the clothes, enter one by one all the items into the system (or all at the same time if RFID is available) and he/she will print the bill to be included in the packet. Every item could be gift-wrapped if it is required. The packet is identified with the order number and sent to the pick-up point. Finally E), there can be several pick-up points and depending on where they are several embodiments are possible. As an example it is possible an automatic pick-up where the client introduces the ticket, or scan the code in the machine and the system delivers the packet. Or on contrary, a guided pick-up where there is an employee in the pick-up point and he/she will receive the pick-up ticket from the user.

The box display unit (or the speaker alternatively) will, at any point of the process, show to the user an option to get help on how to proceed.

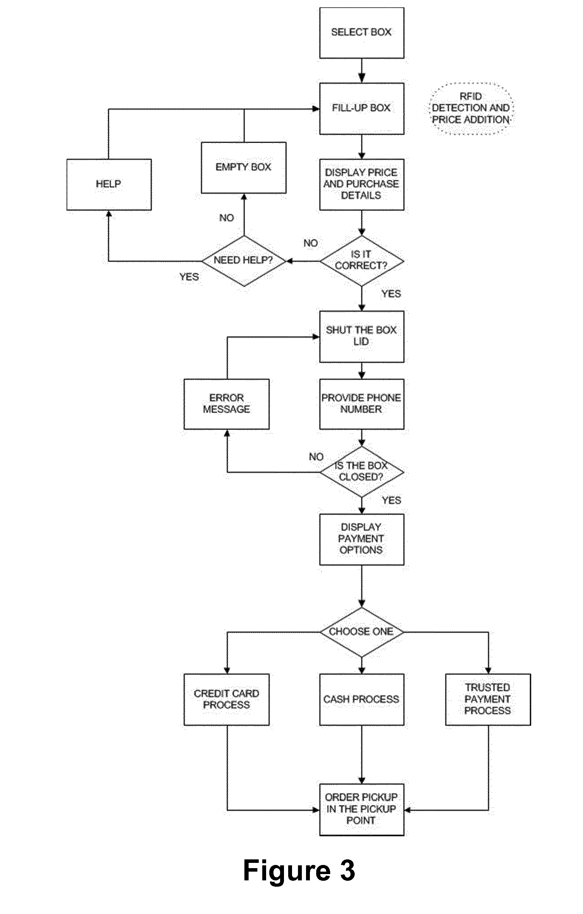

Figure 3 also details, in a flowchart, the stages the user would go through once he/she has decided which products/items he/she is willing to buy.

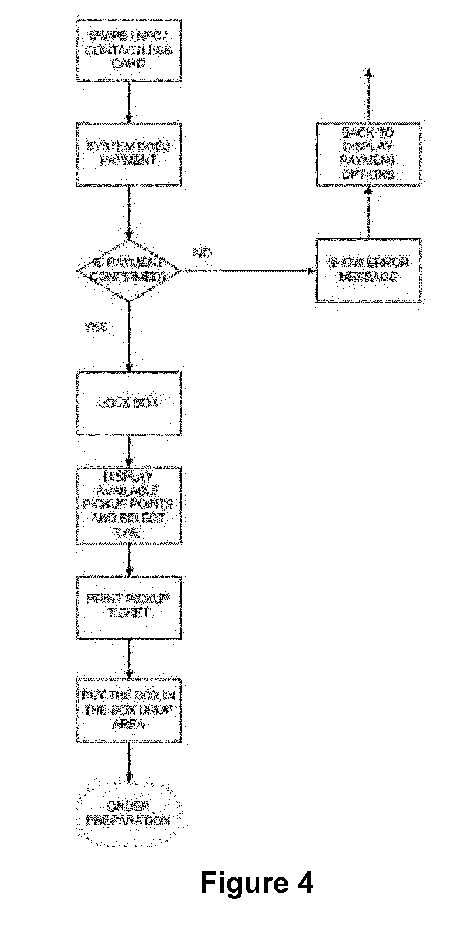

As explained before different payment options for the purchasing can be selected. Figure 4 details a possible credit card payment process. When this payment option is selected the user has to, first of all, use his credit card, NFC device or contactless card on the suitable place available in the box. Once this is done and, if required, the pin is correctly inserted, the system will eventually confirm that the payment is correct. If it is not correct it will show a message and redirect the user to the payment options selection screen. If the payment is confirmed the box will automatically lock, will light up the green light and will prompt the user to select one of the available pick-up points. Once it is selected the box will print a pick-up ticket. At this point the user will put the box in the box drop area following the instructions showed in the display of the box (or communicated by the speaker).

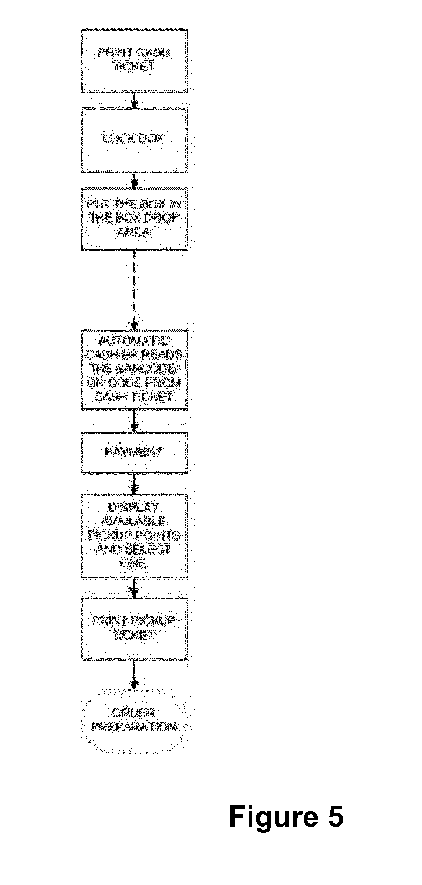

In Figure 5 it is described the flowchart regarding the cash payment embodiment. In this case, the box's printer will print a cash-payment ticket containing all the necessary information for the payment to be done. At this point the box will lock, a red light will be lighted up and the customer will have to take the box to the box drop area. The box will be moved to the backstage and nothing will be done with it until the payment is confirmed. Upon his availability, the user will go to one of the automatic cashiers available and using the barcode or QR in the cash payment ticket will formalize the payment. When this happens the light of the box will turn green or the red light will be turned off and the green one turned on. The cashier will also ask the user to choose one of the available pick-up points for his packet to be sent to and it will also print out a pick-up ticket.

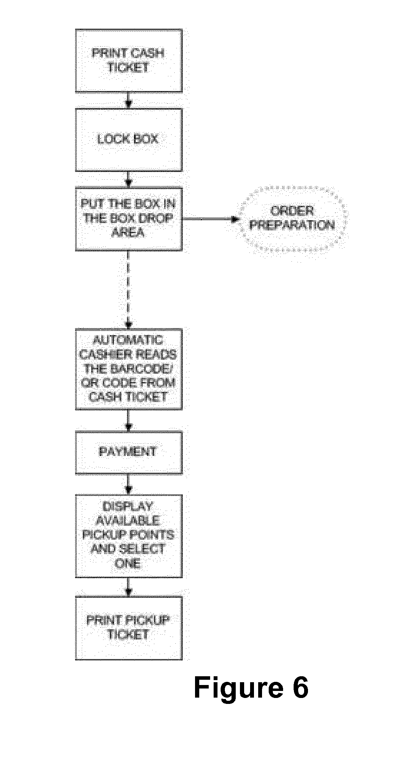

Figure 6 describes the embodiment for a trusted payment. The main difference of this process with the cash payment process is that as this point the user is considered a trusted payer and his/her box can be processed in the backstage even if his/her payment is not confirmed. In this case, the box's printer will print a cash-payment ticket containing all the necessary information for the payment to be done. At this point the box will lock, a green light will be lighted up and the user will have to take the box to the box drop area following the instructions shown in the box display (or communicated by the speaker). Upon his/her availability, the customer will go to one of the automatic cashiers available and using the barcode or QR in the cash payment ticket will formalize the payment. The cashier will also ask the user to choose one of the available pick-up points for his packet to be sent to and it will also print out a pick-up ticket.

The scope of this invention is defined in the following set of claims.

## Claims

1. A system for purchasing items, comprising a container equipped with detector means to carry out an identification of items to be purchased, said items including a tag to be detected when or after said items are placed inside said container by a purchasing user through at least an opening of said container, **characterized in that** said system further comprises:
- first communication means configured to communicate said container with a shop system backend;
- means for providing to said user, at least an information about the items included in said container; and
- locking means to close in a safe manner said container once the items to be purchased have been introduced within said container by said user;
- said locking means being in connection with said first communication means, so that a link with said shop system backend is provided for enabling payment and item delivery options of the purchased items related to said container.

2. A system according to claim 1, **characterized in that** said container is a box and said means for providing information to said user comprise at least one of a display and/or voice means arranged at an external part of said box configured for showing or receiving, at any moment, at least the total of said identified items, the total purchase price of said identified items and, when said locking means had close said box, said payment and delivery options.

3. A system according to claim 1, **characterized in that** said container is a box and said means for providing information comprise any display of a portable computing device of said user, and **in that** further comprises second communication means, to notify to said user, by said display, in addition to said information about the items included in said container, any additional information for assisting in the payment or delivery of the items by said user from said shop system backend.

4. A system according to any of the preceding claims 1 to 3, **characterized in that** said detector means comprise a radio frequency identification receiver and said tag to be detected is a RFID tag.

5. A system according to any of the preceding claims 2 to 4, **characterized in that** said box further comprises a printer unit printing out, once one of the payment options has been selected by said user, a purchasing receipt regarding the selected payment option or a pick-up ticket.

6. A method for purchasing items, said items including a tag to be detected, comprising carrying out, by means of detector means arranged to a container, an identification of said items to be purchased, when or after said items are placed inside a container by a user through at least an opening of said container, **characterized in that** the method comprising following steps:
- communicating by any communication technology said container with a shop system backend for controlling said purchasing;
- displaying and/or telling to said user, an information about the items included in said container;
- detecting a safe close condition of said container with the purchased items within; and
- enabling a communication by said communication technology between the user and said shop system backend related to a payment and a delivery option of the purchased items.

7. A method according to claim 6, **characterized in that** said displaying is performed through a display either incorporated in an external surface of said container, said container being a box, or through a display of any portable user computing device.

8. A method according to any of the preceding claims 6 or 7, **characterized in that** further comprises printing out, by a printer of the box, once said payment option has been selected by said user, a purchasing receipt regarding the selected payment option or a pick-up ticket.

9. A method according to any of the preceding claims 6 to 8, **characterized in that** further comprises lighting up a light incorporated in an external surface of said box indicating a state of said purchasing.

10. A method according to any of the preceding claims 6 to 9, **characterized in that** further comprises placing the box in a predetermined drop area within said shop to permit the box to be opened by controlled opening means in order to allow the items inside to be prepared as purchased items.

11. A method according to claim 10, **characterized in that** further comprises sending a notification to a mobile computer device of said user when the preparation of the purchasing is finished so that the items are ready for being delivered.

12. A method according previous claims 6 to 11, **characterized in that** said payment option comprises at least one of a credit card payment, a cash payment, or a trusted payment.

13. A box to identify items placed therein, comprising detector means configured to carry out an identification of items placed inside said box to purchase them, **characterized in that** further comprises:
- communication means configured to communicate with a shop system backend to enable payment and item delivery options of the purchased items related to said container a procedure purchasing of said items; and
- locking means (6) configured to detect a safe close condition of said box,
wherein said detector means comprise a radio frequency identification receiver.

14. A box according to claim 13, **characterized in that** further comprises:
- a display unit (1) configured to show information regarding said items to be purchased and instructions regarding said procedure purchasing, enabling payment and delivering options;
- a printer (2) configured to print out a purchasing receipt regarding a selected payment option or a pick-up ticket;
- a light (3) configured to indicate a state of said purchasing procedure;
- an electronic payment unit (4); and
- control means configured to at least handle the interaction between the box elements.

15. A box according to claim 14, **characterized in that** said electronic payment unit (4) comprises at least one of a credit card reader unit and/or a contact-less receiver unit.
